# EUROPÄISCHE PATENTSCHRIFT

(11) **EP 1 270 347 B1**
(45) Veröffentlichungstag und Bekanntmachung des Hinweises auf die Patenterteilung: **20.09.2006**
(21) Anmeldenummer: 02013197.5
(22) Anmeldetag: 15.06.2002
(51) Int. Cl.: B60R 25/00, G07C 9/00

(54) **Verfahren zur manipulationsgeschützten Datenkommunikation**
Method for secure data communication
Procedé de communication sécurisé

(30) Priorität: 27.06.2001 DE 10131097
(43) Veröffentlichungstag der Anmeldung: 02.01.2003
(73) Patentinhaber: Hella KGaA Hueck & Co., 59552 Lippstadt (DE)
(72) Erfinder: Mehn, Michael, 59602 Rüthen (DE); Reimann, Martin, 59071 Hamm (DE)

(56) Entgegenhaltungen:
- EP-A- 0 926 021
- EP-A- 0 955 216
- EP-A- 0 999 103
- EP-A- 1 081 000
- WO-A-00/12848
- US-A- 5 898 230

## Beschreibung

Die vorliegende Erfindung betrifft ein Verfahren zur manipulationsgeschützten bidirektionalen Datenkommunikation zwischen mindestes einem ersten und einem zweiten Transceiver über eine Funkdatenübertragungsstrecke, bei der mit informationstragenden Dateninhalten modulierte Funksignale wechselseitig in beide Übertragungsrichtungen übertragen werden, insbesondere zwischen Fahrzeug-Basiseinheiten und mobilen ID-Gebern von Passive-Entry-Systemen von Kraftfahrzeugen, wobei die Trägerfrequenz der Funksignale zeitlich variiert wird und zwischen den Transceivern synchronisiert wird. Ein Gattungsgemäßes Verfahren ist aus der Druckschrift EP 1081000 Gemäß dem Oberbegriff des Anspruchs 1 bekannt.

Im Kraftfahrzeugbereich finden zunehmend elektronische Zugangsberechtigungssysteme Verwendung, die ohne mechanische Schlüssel allein durch Funkübertragung kodierter Daten den Zugang zum Innenraum des Kraftfahrzeugs für berechtigte Benutzer freigeben. Einen besonderen Bedienungskomfort haben Systeme mit den eingangs erwähnten Merkmalen, welche als sogenannte Passive-Entry-/Passive-Go-Systeme bekannt sind. Diese zeichnen sich dadurch aus, dass selbsttätig eine bidirektionale Datenkommunikation über eine Funkdatenübertragungsstrecke zwischen einem im Fahrzeug fest installierten Transceiver der Fahrzeug-Basiseinheit und einem als mobilen ID-Geber ausgebildeten Transceiver aufgebaut wird, wenn dieser mobile ID-Geber, welcher in Scheckkartenform miniaturisiert vom Benutzer ständig mit sich geführt werden kann, in den Kommunikationsbereich des Fahrzeug-Transceivers gebracht wird, d. h. sich ein Fahrer bis auf wenige Meter seinem Fahrzeug nähert. Erst wenn dieser zweiseitige Datenaustausch zwischen den Transceivern zu einer eindeutigen Authentifizierung des ID-Gebers als zugangsberechtigt führt, erfolgt über die Fahrzeug-Basiseinheit eine Freigabe, so dass über entsprechende Steuereinrichtungen die Fahrzeugtüren entriegelt werden.

Um einen unbefugten Zugriff auf ein Fahrzeug möglichst sicher zu verhindern, sollte der Datenaustausch über die Funkübertragungsstrecke möglichst manipulationsgeschützt erfolgen. Sowohl die von dem als Fahrzeug-Basiseinheit dienenden Transceiver abgestrahlten Funksignale, als auch die von dem ID-Geber am Empfang eines solchen Basis-Signals als Antwort zurückgesendeten modulierten Funksignale könnten nämlich ansonsten durch Empfänger einer Manipulationseinrichtung empfangen, gespeichert, gegebenenfalls entschlüsselt und über entsprechende manipulierende Sendeeinrichtungen dazu benutzt werden, eine Authentifizierung vorzutäuschen und auf diese Weise Zugang zum Fahrzeug zu erhalten.

Für die vorgenannte funkstreckenbasierte Datenkommunikation zwischen den Transceivern werden frequenzmodulierte Datensignale verwendet. Eine Trägerfrequenz f bildet dann die Mittenfrequenz der Seitenbänder mit den Frequenzen (f + Δf) und (f - Δf). Zur Manipulation ist es jedoch denkbar, diese frequenzmodulierten Signale des im Fahrzeug installierten Transceivers zu empfangen, über zwischengeschaltete lineare Frequenzumsetzer und eine zusätzliche Funkstrecke weiterzuleiten und auf diese Weise über einen weiteren manipulierenden Transceiver, welcher in die Nähe des ID-Gebers gebracht wird, dessen tatsächliche Anwesenheit beim Fahrzeug vorzutäuschen. Durch die Möglichkeit, die lineare Frequenzumsetzung quasi in Echtzeit durchzuführen, ist diese Art der Manipulation bei den im Stand der Technik bekannten Funkdatenübertragungsstrecken nicht völlig auszuschließen.

Angesichts dieser Problematik liegt der vorliegenden Erfindung die Aufgabenstellung zugrunde, ein Verfahren zur Datenkommunikation zur Verfügung zu stellen, welches eine externe Manipulation erschwert.

Zur Lösung dieser Aufgabenstellung wird erfindungsgemäß vorgeschlagen, dass ein erster Transceiver datenmodulierte Trägersignale auf beiden Seitenbändern der ersten Trägersequenz sendet und zeitgleich ein zweiter Transceiver Trägersignale mit einer zweiten Trägerfrequenz sendet, welche einer der beiden Seitenbandfrequenzen des ersten Transceivers entspricht. Der erste Transceiver bildet dabei den Datensender, während der zweite Transceiver Daten empfängt. Die Besonderheit besteht nun darin, dass der erste Transceiver auf beiden Seitenbändern zur Trägerfrequenz f, welche die Seitenbandfrequenzen f + Δf und f - Δf haben, sendet, während der empfangende Transceiver auf der Trägerfrequenz f + Δf oder f - Δf sendet, also einer der beiden Seitenbandfrequenzen, und auf dem jeweils anderen Seitenband den datenmodulierten Träger des ersten Transceivers empfangen kann. Für einen Manipulationsversuch darf die Breite des Übertragungskanals eines Angreifers höchstens so breit sein, wie der Abstand der Seitenbandfrequenzen von der Mittenfrequenz des frequenzmodulierten Trägersignals, also der Trägerfrequenz f des ersten Transceivers. Durch den zeitgleich auf einem der Seitenbänder sendenden zweiten Transceiver ist dabei jedoch die Unterscheidung von Nutzdaten und Redundanzdaten für den Angreifer nicht möglich. Dadurch wird eine besonders hohe Manipulationssicherheit erreicht.

Bei dem erfindungsgemäßen Verfahren wird der Ansatz verfolgt, dass die Funkdatenkommunikation nicht auf einer zeitlich konstanten, sondern zeitlich wechselnden Trägerfrequenzen erfolgt. In einem derartigen System zur Datenkommunikation ist die Trägerfrequenz bei sämtlichen Kommunikationsteilnehmer hierzu variabel einstellbar.

Durch das erfindungsgemäße Verfahren wird eine zusätzliche Verschlüsselung der übertragenen Datenströme dadurch erreicht, dass nicht nur eine Verschlüsselung der Daten selbst, sondern zusätzlich des von diesen modulierten Trägersignals erfolgt. Diese zeitliche Kodierung des Trägersignals erfolgt durch Umschalten auf unterschiedliche Frequenzen. Daraus resultiert der grundsätzliche Vorteil, dass ein Angreifer mit Manipulationsabsichten die Dateninhalte nicht durch Überwachung einer einzigen Übertragungsfrequenz erlangen kann, sondern sich ständig wechselnden Übertragungsfrequenzen gegenübersieht. Erschwert wird der Manipulationsversuch noch dadurch, dass die zwischen den Transceivern vereinbarte Variation der Übertragungsfrequenzen einem Angreifer zunächst nicht bekannt ist und außerdem so unregelmäßig wechselnd gewählt werden kann, dass es für einen Manipulationsversuch nicht möglich ist, eine Systematik in der Folge der Frequenzwechsel nachzuvollziehen. Dadurch kann eine deutlich erhöhte Manipulationssicherheit erreicht werden.

Die Trägerfrequenz wird bevorzugt innerhalb der Bandgrenzen variiert. Dies ermöglicht einen hinreichenden Spielraum und durch die Verwendung trennscharfer Transceiver eine Vielzahl von Verschlüsselungssequenzen. Störungen von benachbarten Bändern werden dadurch weitgehend vermieden.

Die Trägerfrequenz wird bevorzugt bei jeder Variation um eine Variationsschrittgröße umgeschaltet, d. h. bezogen auf den Absolutwert der Frequenz um einen bestimmten Betrag erhöht oder verringert. Vorzugsweise wird dabei die Trägerfrequenz jeweils um eine vorgegebene Variationsschrittgröße variiert. Damit ist gemeint, dass die Trägerfrequenz nicht kontinuierlich verstellt wird, sondern jeweils sprungartig auf andere Frequenzen umgeschaltet wird. Diese Variationsschrittgröße kann konstant oder ebenfalls wechselnd sein.

Eine Möglichkeit zur Verschlüsselung der Trägerfrequenzen besteht darin, dass die Trägerfrequenz synchron und phasengleich für die beteiligten Transceiver variiert wird. Hierzu kann beispielsweise vorgesehen sein, dass die Trägerfrequenz und die verwendete Variationsschrittgröße dieser Trägerfrequenz bei einem Wechsel allen Kommunikationsteilnehmern, also sämtlichen Transceivern bekannt ist. Diese Art der Codierung kann jeweils für eine Fahrzeug-Basiseinheit und einen dazugehörigen ID-Geber als charakteristische Codierung vorgegeben werden. Vorteilhaft darin ist, dass eine äußerst schnelle Synchronisierung der Dateninhalte beim Aufbau einer Funkdatenübertragung möglich ist.

Eine ebenfalls vorteilhafte Alternativlösung sieht vor, dass die Trägerfrequenz und Variationsschrittgröße nicht nach einem festgelegten Muster zu Beginn der bidirektionalen Datenübertragung vorgegeben werden, sondern dass beim Start der bidirektionalen Datenübertragung vom ersten Transceiver eine dem zweiten Transceiver zunächst unbekannte Trägerfrequenz zufällig festgelegt wird und der zweite Transceiver durch Scannen des Frequenzbandes damit synchronisiert wird. Bei dieser Variante übernimmt der erste Transceiver, beispielsweise die im Kraftfahrzeug fest installierte Kraftfahrzeug-Basiseinheit, welche durch zyklisches Aussenden von Abfragesignalen die Anwesenheit von weiteren Transceivern in ihrem Sende-Empfangs-Bereich prüft, eine Art Pilotfunktion. Dies bezieht sich auf die Vorgabe der Codierungssequenz für die Trägerfrequenz, und zwar sowohl bezüglich des momentanen Absolutwerts der Trägerfrequenz, der jeweiligen Variationsschrittgröße bei einer Umschaltung als auch der Zeitdauer des Intervalls zwischen den Umschaltungen. Der zweite Transceiver erkennt diese Vorgaben durch Scannen der Signale des ersten Transceivers und synchronisiert sich automatisch darauf. Dieses Verfahren hat den Vorteil, dass zur Codierung Quasi-Zufallssequenzen herangezogen werden können, die zu Manipulationszwecken mit vertretbarem Aufwand nicht zu dechiffrieren sind.

Während der Datenübertragung zwischen den Transceivern kann die Trägerfrequenz konstant gehalten werden. Alternativ ist es jedoch gleichfalls möglich, die Trägerfrequenz während der Datenübertragung ebenfalls zu variieren.

Die Manipulationssicherheit der Datenübertragung kann durch unterschiedliche Modulation der Seitenbänder zu einer Trägerfrequenz weiter erhöht werden. Eine Möglichkeit hierzu sieht vor, dass ein erster Transceiver als datenmoduliertes Trägersignal ein amplitudenmoduliertes Trägersignal auf einem Seitenband der Trägerfrequenz sendet und ein zweiter Transceiver dieses amplitudenmodulierte Trägersignal auf dem einen Seitenband empfängt und bevorzugt zeitgleich auf dem anderen Seitenband ein unmoduliertes Trägersignal sendet. Der erste Transceiver, beispielsweise ein Schlüssel oder ID-Geber, sendet beispielsweise auf der Seitenbandfrequenz f + Δf der Trägerfrequenz f ein amplitudenmoduliertes Signal, welches von dem zweiten Transceiver im Fahrzeug auf dieser Seitenbandfrequenz f + Δf empfangen und demoduliert wird. Diese Demodulation erfolgt über einen ASK (Amplitude Shift Keying = Amplitudenmodulations)-Demodulator. Währenddessen wird dieses amplitudenmodulierte Datensignal von dem zweiten Transceiver auf der zweiten Seitenbandfrequenz f - Δf zur Trägerfrequenz f mit einem unmodulierten Trägersignal überlagert. Dadurch wird bei einem Manipulationsversuch die unbefugte Demodulation des Datensignals aus dem Trägersignal des ersten Transceivers erschwert.

Alternativ zur Amplitudenmodulation des datentragenden Trägersignals ist es möglich, dass der erste Transceiver als datenmoduliertes Trägersignal ein frequenzmoduliertes Trägersignal mit einer Trägerfrequenz f sendet, und der zweite Transceiver dieses frequenzmodulierte Trägersignal auf dem einen Seitenband empfängt und bevorzugt zeitgleich auf dem anderen Seitenband ein unmoduliertes Trägersignal sendet. Wie bei der vorangehend beschriebenen Variante des Verfahrens erfolgt hierbei die Datenübertragung vom ersten zum zweiten Transceiver über die Seitenbandfrequenz f + Δf, während das andere Seitenband zur Trägerfrequenz f mit der Seitenbandfrequenz f - Δf von dem zweiten Transceiver, der beispielsweise im Fahrzeug untergebracht ist, mit einem unmodulierten Dauerträger der Frequenz f - Δf überlagert. Dies hat ebenfalls den vorteilhaften Effekt, dass eine unbefugte Demodulation des Dateninhalts durch Empfang der zwischen den Transceivern ausgetauschten Funksignale zusätzlich erschwert wird.

Eine weitere Alternative zu den beiden vorgenannten Sicherungsmaßnahmen sieht vor, dass der erste Transceiver als datenmoduliertes Trägersignal ein frequenzmoduliertes Trägersignal mit der Trägerfrequenz f sendet, und ein zweiter Transceiver ein amplitudenmoduliertes Trägersignal auf zumindest einer Seitenbandfrequenz (f + Δf oder f - Δf) empfängt und bevorzugt zeitgleich ein frequenzmoduliertes Trägersignal mit der Trägerfrequenz f sendet. Die Daten des vom ersten Transceiver, beispielsweise dem ID-Geber gesendeten Trägersignals werden dabei in dem zweiten Transceiver, beispielsweise im Fahrzeug, durch Amplitudendemolution mittels eines ASK-Demodulators extrahiert. Die Überlagerung des Trägersignals durch einen um ± Δf frequenzmodulierten Trägers seitens des zweiten Transceivers sorgt wiederum dafür, dass durch eine einfache Demodulation des zu Manipulationszwecken abgehörten Signals der übertragene Dateninhalt nicht ohne weiteres ermittelt werden kann.

Nachfolgend wird das erfindungsgemäße Verfahren näher erläutert unter Bezugnahme auf die beigefügten Zeichnungen. Im einzelnen zeigt:

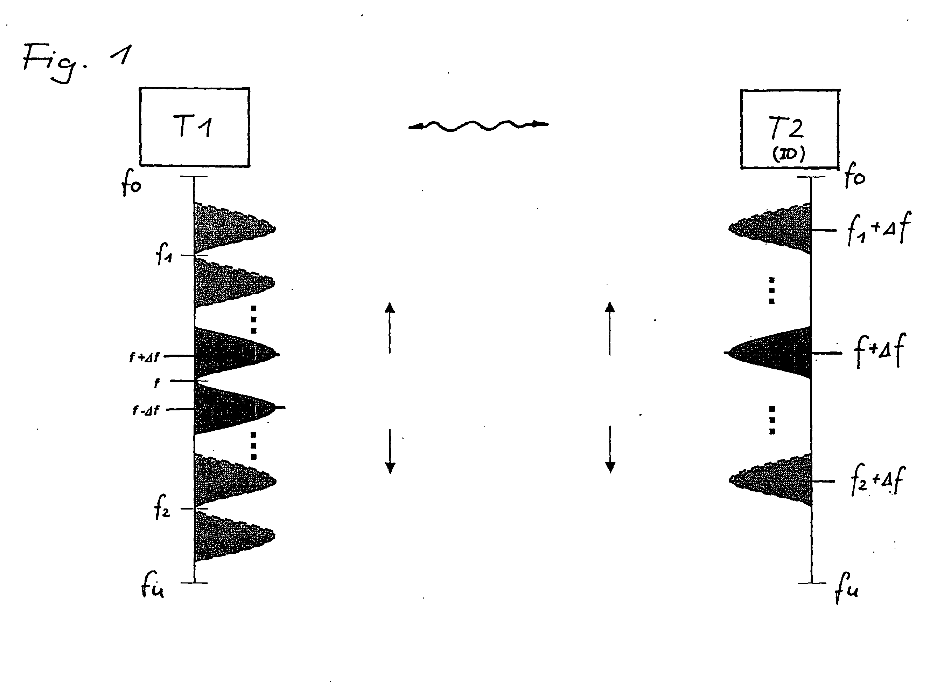

- Fig. 1: eine schematische Darstellung einer Funkdatenübertragung gemäß dem erfindungsgemäßen Verfahren.

In Fig. 1 ist schematisch ein erster Transceiver T1, beispielsweise eine in einem Fahrzeug fest eingebauten Fahrzeug-Basiseinheit, und ein zweiter Transceiver T2, beispielsweise ein mobiler ID-Geber dargestellt. Diese beiden Transceiver T1 und T2 haben jeweils Sende- und Empfangseinrichtungen zum Senden bzw. Empfangen frequenzmodulierter Funksignale innerhalb desselben Frequenzbandes. Dieses Frequenzband mit der oberen Bandgrenze fₒ und der unteren Bandgrenze fᵤ ist frequenzmäßig senkrecht nach unten aufgetragen.

Aus dieser Darstellung ist deutlich erkennbar, dass der Transceiver T1, der beispielhaft im Sendebetrieb eingezeichnet ist, bezüglich der Trägerfrequenz f auf den beiden Seitenbandfrequenzen f + Δf und f - Δf datenmodulierte Signale abstrahlen kann. Bei den Frequenzen f1 und f2 sind gestrichelt die Seitenbänder ebenfalls eingezeichnet. Damit und mit den auf und abwärts gerichteten Pfeilen ist angedeutet, dass die Trägerfrequenz von T1 von f auf f1 oder f2 oder dazwischenliegende Frequenzwerte fx umschaltbar ist. Während einer Funkdatenübertragung gemäß dem erfindungsgemäßen Verfahren erfolgt dadurch die erfindungsgemäße Variation der Trägerfrequenz.

Zeitgleich mit dem Sendebetrieb des Transceivers T1 sendet der empfangene Transceiver T2, nämlich der ID-Geber, einen Träger mit der Frequenz f + Δf ab, also der oberen Seitenbandfrequenz von T1. Diese obere Seitenband wird folglich überlagert und dient nicht zur Datenübertragung. Die Datenübertragung erfolgt in diesem Fall durch das untere Seitenband von T1 mit der Seitenbandfrequenz f - Δf. Durch den vorliegenden Frequenzhub kann bei T2 eine Demodulation erfolgen.

Bei T2 wird die Empfangsfrequenz gemäß der Variation der Trägerfrequenz f bei T1 variiert. Dies kann dadurch erfolgen, dass bei T1 und T2 die Trägerfrequenz f, f1 oder f2 sowie die Variationsschrittgröße, also der Frequenzabstand beispielsweise zwischen f und f1 bekannt ist. Gemäß diesem vorgegebenen Codierungsprotokoll können die von T1 an T2 gesendeten Dateninhalte von T2 unmittelbar erfasst werden. Alternativ ist es möglich, dass von Seiten T2 das Frequenzband fᵤ - fₒ, welches von T1 überstrichen wird, ständig abgescannt wird, dadurch kann die dort vorgegebene Variation der Trägerfrequenz erfasst werden, so dass entsprechend der von T2 gesendete Träger frequenzmäßig der oberen Seitenbandfrequenz von T1 nachgeführt werden kann und der Empfang und die Demodulation des unteren Seitenbands ebenfalls erfolgen kann. Die Trägerfrequenz sowie die Variationsschrittgröße kann bei diesen Verfahren von T1 zufällig vorgegeben werden.

Bei einem Manipulationsversuch wäre ein Angreifer zum einen dazu gezwungen, auf die ihm unbekannte Variation der Trägerfrequenz jeweils zu synchronisieren. Außerdem dürfte der Übertragungskanal des Angreifers nicht breiter sein, als der Abstand der Seitenbänder von der Mittenfrequenz des frequenzmodulierten Trägersignals f, also Δf. Dabei wäre jedoch die Unterscheidung der im unteren Seitenband übertragenen Nutzdaten von den Übrigen Signalen, welche Redundanzen bilden, nicht möglich.

## Patentansprüche

1. Verfahren zur manipulationsgeschützten bidirektionalen Datenkommunikation zwischen mindestes einem ersten und einem zweiten Transceiver über eine Funkdatenübertragungsstrecke, bei der mit informationstragenden Dateninhalten modulierte Funksignale wechselseitig in beide Übertragungsrichtungen übertragen werden, dies zwischen FahrzeugBasiseinheiten und mobilen ID-Gebern von Passive-Entry-Systemen von Kraftfahrzeugen, wobei die Trägerfrequenz der Funksignale zeitlich variiert wird und zwischen den Transceivern synchronisiert wird,
**dadurch gekennzeichnet, dass** ein erster Transceiver datenmodulierte Trägersignale auf beiden Seitenbändern der ersten Trägerfrequenz sendet und zeitgleich ein zweiter Transceiver Trägersignale mit einer zweiten Trägerfrequenz sendet, welche einer der beiden Seitenbandfrequenzen des ersten Transceivers entspricht

2. Verfahren nach Anspruch 1, **dadurch gekennzeichnet, dass** die Trägerfrequenz innerhalb der Bandgrenzen variiert wird.

3. Verfahren nach Anspruch 1, **dadurch gekennzeichnet, dass** die Trägerfrequenz jeweils um eine vorgegebene Variationsschrittgröße variiert wird.

4. Verfahren nach einem der Ansprüche 1 bis 3, **dadurch gekennzeichnet, dass** die Trägerfrequenz synchron und phasengleich variiert wird.

5. Verfahren nach einem der Ansprüche 1 bis 4, **dadurch gekennzeichnet, dass** die vorgegebene Trägerfrequenz und die Variationsschrittgröße beim Start der bidirektionalen Datenübertragung sämtlichen beteiligten Transceivern bekannt ist.

6. Verfahren nach einem der Ansprüche 1 bis 5, **dadurch gekennzeichnet, dass** beim Start der bidirektionalen Datenübertragung vom ersten Transceiver eine dem zweiten Transceiver zunächst unbekannte Trägerfrequenz zufällig festgelegt wird und der zweite Transceiver durch Scannen des Frequenzbandes damit synchronisiert wird.

7. Verfahren nach einem der Ansprüche 1 bis 6, **dadurch gekennzeichnet, dass** die Trägerfrequenz während der Datenübertragung konstant ist.

8. Verfahren nach einem der Ansprüche 1 bis 7, **dadurch gekennzeichnet, dass** die Trägerfrequenz während der Datenübertragung variiert wird.

9. Verfahren nach einem der Ansprüche 1 bis 8, **dadurch gekennzeichnet, dass** ein erster Transceiver als datenmoduliertes Trägersignal ein amplitudenmoduliertes Trägersignal auf einem Seitenband der Trägerfrequenz sendet, und ein zweiter Transceiver dieses amplitudenmodulierte Trägersignal auf dem einem Seitenband empfängt und, bevorzugt zeitgleich, auf dem anderen Seitenband ein unmoduliertes Trägersignal sendet.

10. Verfahren nach einem der Ansprüche 1 bis 8, **dadurch gekennzeichnet, dass** ein erster Transceiver als datenmoduliertes Trägersignal einen frequenzmodulierten Träger mit der Trägerfrequenz sendet, und ein zweiter Transceiver dieses frequenzmodulierte Trägersignal auf dem einem Seitenband empfängt, und bevorzugt zeitgleich, auf dem anderen Seitenband ein unmoduliertes Trägersignal sendet.

11. Verfahren nach einem der Ansprüche 1 bis 8, **dadurch gekennzeichnet, dass** ein erster Transceiver als datenmoduliertes Trägersignal ein frequenzmoduliertes Trägersignal mit der Trägerfrequenz sendet, und ein zweiter Transceiver ein amplitudenmoduliertes Trägersignal auf zumindest einer Seitenbandfrequenz empfängt und, bevorzugt zeitgleich, ein frequenzmoduliertes Trägersignal sendet.

## Claims

1. Method for secure bi-directional data communication between at least a first and a second transceiver through a radio data transmission section, in which radio signals modulated by information carrying data content are transmitted reciprocally in both transmission directions between vehicle base units and mobile identification transmitters of passive entry systems for motor vehicles, in which the carrier frequency of the radio signals is varied with time and synchronised between the transceivers,
**characterised in that** a first transceiver sends data modulated carrier signals on both sidebands of the first carrier frequency and at the same time a second transceiver transmits carrier signals with a second carrier frequency, which corresponds to one of the sideband frequencies of the first transceiver.

2. Method according to claim 1, **characterised in that** the carrier frequency is varied within the band limits.

3. Method according to claim 1, **characterised in that** the carrier frequency is varied by a preset increment size of variation.

4. Method according to one of claims 1 to 3, **characterised in that** the carrier frequency is varied synchronously and in phase.

5. Method according to one of claims 1 to 4, **characterised in that** the preset carrier frequency and the increment size of variation is known at the start of the bi-directional transmission of all transceivers involved.

6. Method according to one of claims 1 to 5, **characterised in that** at the start of the bi-directional data transmission from the first transceiver a carrier frequency is established by chance, which is at first unknown to the second transceiver, and the second transceiver is synchronised with it by scanning the frequency band.

7. Method according to one of claims 1 to 6, **characterised in that** the carrier frequency is constant during the data transmission.

8. Method according to one of claims 1 to 7, **characterised in that** the carrier frequency is varied during the data transmission.

9. Method according to one of claims 1 to 8, **characterised in that** a first transceiver sends an amplitude modulated carrier signal as a data modulated carrier signal on a sideband of the carrier frequency and a second transceiver of this amplitude modulated carrier signal receives it on one sideband and preferably at the same time transmits an unmodulated carrier signal on the other sideband.

10. Method according to one of claims 1 to 8, **characterised in that** a first transceiver sends a frequency modulated carrier as a data modulated carrier signal with the carrier frequency and a second transceiver receives this frequency modulated carrier signal on one sideband and preferably at the same time transmits an unmodulated carrier signal on the other sideband.

11. Method according to one of claims 1 to 8, **characterised in that** a first transceiver transmits a frequency modulated carrier signal as a data modulated carrier signal with the carrier frequency and a second transceiver receives an amplitude modulated carrier signal on at least one sideband frequency and preferably at the same time transmits a frequency modulated carrier signal.

## Revendications

1. Procédé de communication de données bidirectionnelle sécurisée entre au moins un premier et un second émetteur-récepteur par l'intermédiaire d'une liaison de transmission de données radio, dans laquelle des signaux radio modulés avec des contenus porteurs d'informations de données sont transmis alternativement dans les deux directions de transmission, ceci entre des unités de base de véhicule et des capteurs ID mobiles de systèmes "Passive Entry" de véhicules, où la fréquence porteuse des signaux radio est faite varier dans le temps et est synchronisée entre les émetteurs-récepteurs,
**caractérisé en ce qu'**un premier émetteur-récepteur émet des signaux porteurs modulés en données sur deux bandes latérales de la première fréquence porteuse et simultanément un second émetteur-récepteur émet des signaux porteurs avec une seconde fréquence porteuse, qui correspond à une des deux fréquences de bande latérale du premier émetteur-récepteur.

2. Procédé selon la revendication 1, **caractérisé en ce que** la fréquence porteuse est faite varier à l'intérieur des limites de fréquence.

3. Procédé selon la revendication 1, **caractérisé en ce que** la fréquence porteuse est faite varier respectivement autour d'une amplitude du pas de variation.

4. Procédé selon l'une des revendications 1 à 3, **caractérisé en ce que** la fréquence porteuse est faite varier de façon synchrone et équiphasée.

5. Procédé selon l'une des revendications 1 à 4, **caractérisé en ce que** la fréquence porteuse déterminée et l'amplitude du pas de variation est connue de tous les émetteurs-récepteurs participants au début de la transmission de données bidirectionnelle.

6. Procédé selon l'une des revendications 1 à 5, **caractérisé en ce que**, au début de la transmission de données bidirectionnelle par le premier émetteur-récepteur, une fréquence porteuse inconnue tout d'abord du second émetteur-récepteur est définie au hasard et le second émetteur-récepteur est synchronisé avec elle par balayage de la bande de fréquence.

7. Procédé selon l'une des revendications 1 à 6, **caractérisé en ce que** la fréquence porteuse est constante pendant la transmission de données.

8. Procédé selon l'une des revendications 1 à 7, **caractérisé en ce que** la fréquence porteuse est faite varier pendant la transmission de données.

9. Procédé selon l'une des revendications 1 à 8, **caractérisé en ce qu'**un premier émetteur-récepteur émet un signal porteur modulé en amplitude en tant que signal porteur modulé en données sur une bande latérale de la fréquence porteuse, et un second émetteur-récepteur reçoit ce signal porteur modulé en amplitude sur une bande latérale et, de préférence simultanément, émet un signal porteur non modulé sur l'autre bande latérale.

10. Procédé selon l'une des revendications 1 à 8, **caractérisé en ce qu'**un premier émetteur-récepteur émet, en tant que signal porteur modulé en données, une fréquence porteuse modulée en fréquence avec la fréquence porteuse, et un second émetteur-récepteur reçoit ce signal porteur modulé en fréquence sur une bande latérale, et de préférence simultanément, émet un signal porteur non modulé sur l'autre bande latérale.

11. Procédé selon l'une des revendications 1 à 8, **caractérisé en ce qu'**un premier émetteur-récepteur émet, en tant que signal porteur modulé en données, un signal porteur modulé en fréquence avec la fréquence porteuse, et un second émetteur-récepteur reçoit un signal porteur modulé en amplitude sur au moins une fréquence de bande latérale et, de préférence simultanément, émet un signal porteur modulé en fréquence.
